# EUROPÄISCHE PATENTANMELDUNG

(11) **EP 4 134 198 A1**
(43) Veröffentlichungstag der Anmeldung: **15.02.2023**
(21) Anmeldenummer: 22179547.9
(22) Anmeldetag: 17.06.2022
(51) Int. Cl.: B23Q 17/09

(54) **SYSTEM ZUR SPANENDEN BEARBEITUNG EINES WERKSTÜCKES UND ZUR MESSUNG UND AUSWERTUNG VON KRAFT UND DREHMOMENT BEI DER SPANENDEN BEARBEITUNG DES WERKSTÜCKES**

(30) Priorität: 13.08.2021 EP 21191259
(71) Anmelder: Kistler Holding AG, 8408 Winterthur (CH)
(72) Erfinder: Gerber, Christian, 8472 Seuzach (CH); Keitzel, Gunnar, 8442 Hettlingen (CH)

(57) **Zusammenfassung**

Die Erfindung betrifft ein System (100) zur spanenden Bearbeitung eines Werkstückes (0) und zur Messung und Auswertung von Kraft und Drehmoment bei der spanenden Bearbeitung des Werkstückes (0); welches System (100) eine Werkzeugmaschine (1) zur spanenden Bearbeitung des Werkstückes (0) mit einem Werkzeug (11), eine Vorrichtung (2) zur Messung von Kraft und Drehmoment bei der spanenden Bearbeitung des Werkstückes (0) und eine Auswerteeinheit (3) zur Auswertung von Messwertdaten (MD) der Vorrichtung (2) aufweist; welche Vorrichtung (2) in der Werkzeugmaschine (1) eingebaut ist und sich bei der spanenden Bearbeitung mit dem Werkzeug (12) um eine Drehachse (Z) dreht; welche Auswerteeinheit (3) ortsfest ist; welche Vorrichtung (2) eine Messeinheit (22) aufweist, welche Messeinheit (22) unter der bei der spanenden Bearbeitung wirkenden Komponentenarten (Fx, Fy, Fz, Mz) von Kraft und Drehmoment Messwerte (P) erzeugt; welche Vorrichtung (2) eine Kontrolleinheit (23) aufweist, welche Kontrolleinheit (23) die Messwerte (P) als Messwertdaten (MD) drahtlos direkt an die Auswerteeinheit (3) überträgt; wobei die drahtlose Übertragung der Messwertdaten (MD) mit einer Sendeleistung (L) im Bereich von 0.1mW bis 10mW erfolgt.

## Beschreibung

### Technisches Gebiet

Die Erfindung betrifft ein System zur spanenden Bearbeitung eines Werkstückes und zur Messung und Auswertung von Kraft und Drehmoment bei der spanenden Bearbeitung des Werkstückes nach dem Oberbegriff des unabhängigen Anspruches.

### Stand der Technik

Zur spanenden Bearbeitung eines Werkstückes wird üblicherweise eine Werkzeugmaschine verwendet, welche eine Spindel, eine Werkzeughalterung und ein Werkzeug aufweist. Das Werkzeug ist in der Werkzeughalterung befestigt und die Werkzeughalterung ist an der Spindel befestigt. Die Spindel die Werkzeughalterung und das Werkzeug um eine Drehachse. Dabei tritt das sich drehende Werkzeug in das Werkstück ein und trennt vom Werkstück Material mechanisch in Form von Späne ab. Dem Werkstück wird so eine definierte Form gegeben. Die spanende Bearbeitung umfasst Drehen, Bohren, Fräsen, usw.

Zur Überwachung der Qualität der spanenden Bearbeitung werden die vom sich drehenden Werkzeug auf das Werkstück ausgeübte Kraft und Drehmoment gemessen und ausgewertet. Um Kraft und Drehmoment genau zu messen, wird eine Vorrichtung so nahe wie möglich am sich drehenden Werkzeug angeordnet.

Eine solche Vorrichtung wird von der Anmelderin als 4-Komponenten Dynamometer Typ 9170A gemäss dem Datenblatt 9170A_000-995d-08.19 vertrieben. Das 4-Komponenten Dynamometer Typ 9170A weist eine Rotoreinheit, eine Statoreinheit und ein Anschlusskabel auf. Die Rotoreinheit ist an Stelle der Werkzeughalterung in der Werkzeugmaschine eingebaut. Dazu ist das Werkzeug über einen Werkzeugadapter an der Rotoreinheit befestigt und die Rotoreinheit ist über einen Spindeladapter an der Spindel befestigt. Die Rotoreinheit dreht sich somit bei der spanenden Bearbeitung mit dem Werkzeug und misst drei Komponentenarten der Kraft entlang von drei senkrecht aufeinander stehenden Achsen und eine Komponentenart vom Drehmoment um die Drehachse. Für die gemessenen Komponenten von Kraft und Drehmoment erzeugt die Rotoreinheit Messwertdaten. Die Statoreinheit ist ortsfest, durch einen Luftspalt von einigen Millimeter Breite beabstandet, nahe an der Rotoreinheit angeordnet. Durch den Luftspalt versorgt die Statoreinheit die Rotoreinheit drahtlos mit elektrischer Energie. Durch den Luftspalt überträgt die Rotoreinheit die Messwertdaten drahtlos zur Statoreinheit. Von der Statoreinheit überträgt das Anschlusskabel die Messwertdaten zu einer entfernten, ebenfalls ortsfesten Auswerteeinheit. Die Auswerteeinheit wertet die Messwertdaten aus. Die Werkzeugmaschine, die Vorrichtung und die Auswerteeinheit bilden ein System.

Das 4-Komponenten Dynamometer Typ 9170A misst jede Komponentenart von Kraft und Drehmoment in einem eigenen Messkanal. Dazu verwendet das 4-Komponenten Dynamometer Typ 9170A piezoelektrische Aufnehmer, welche unter der Wirkung der Komponentenart von Kraft und Drehmoment Messwerte in Form von elektrischen Polarisationsladungen erzeugen. Piezoelektrische Aufnehmer ermöglichen eine hohe Abtastrate. Das 4-Komponenten Dynamometer Typ 9170A misst die Komponentenart von Kraft und Drehmoment pro Messkanal mit einer Abtastrate von 22.2kHz. Die Abtastrate gibt die zeitliche Genauigkeit der Messwerte an. Die Rotoreinheit digitalisiert die Messwerte zu Messwertdaten. Die Messwertdaten haben eine Auflösung von 12bit. Die Auflösung liefert die Detailgenauigkeit der Messwertdaten.

Nun besteht jedoch der Kundenwunsch nach einem System, welches Kraft und das Drehmoment mit noch höherer Genauigkeit misst. Denn so lassen sich Kraft und das Drehmoment bei hohen Umdrehungszahlen mit mindestens einem Messwert pro Umdrehung der Rotoreinheit mit noch höherer Detailgenauigkeit messen, was in Echtzeit noch akkuratere Aussagen über den Zustand des Werkzeuges, wie Verschleiss, Veränderung von Kraft und Drehmoment, usw. ermöglicht.

Ein weiterer Kundenwunsch besteht nach einem System mit einer Vorrichtung ohne Statoreinheit und ohne Anschlusskabel. Denn gerade bei kleinen Werkzeugen und kleinen Werkzeugdurchmessern sind die Raumverhältnisse an der Werkzeugmaschine eng, was die Anordnung der Statoreinheit nahe der Rotoreinheit erschwert oder gar verunmöglicht. Und das Anschlusskabel muss in der Werkstatt der Werkzeugmaschine sorgfältig verlegt werden, um es vor Beschädigung und somit Ausfall des Systems zu schützen. Die Anordnung der Statoreinheit nahe an der Rotoreinheit und die Verlegung des Anschlusskabels in der Werkstatt erhöhen jedoch die Rüstzeit des Systems und verteuern die spanende Bearbeitung des Werkstückes.

Schliesslich ist es ein Kundenwunsch, ein System bereitzustellen, welches für eine kostengünstige spanende Bearbeitung des Werkstückes auch eine unterbrechungssfreie Betriebszeit von mindestens 8h aufweist. In der Betriebszeit von mindestens 8h soll die Vorrichtung während einer Messzeit von mindestens 4h Kraft und Drehmoment messen können, ohne dass der Betrieb des Systems für die Übermittlung von Messwertdaten oder die Versorgung der Vorrichtung mit elektrischer Energie unterbrochen werden muss.

Eine erste Aufgabe der vorliegenden Erfindung besteht darin, ein System zur spanenden Bearbeitung eines Werkstückes und zur Messung und Auswertung von Kraft und Drehmoment bei der spanenden Bearbeitung des Werkstückes bereitzustellen, welches die Kraft und das Drehmoment mit hoher Genauigkeit messen kann.

Eine zweite Aufgabe der Erfindung ist es, ein System zur spanenden Bearbeitung eines Werkstückes und zur Messung und Auswertung von Kraft und Drehmoment bei der spanenden Bearbeitung des Werkstückes aufzuzeigen, welches keine Statoreinheit und kein Anschlusskabel benötigt.

Und als dritte Aufgabe soll die Erfindung ein System zur spanenden Bearbeitung eines Werkstückes liefern, welches eine unterbrechungsfreie Betriebszeit von mindestens 8h ermöglicht.

### Darstellung der Erfindung

Zumindest eine dieser Aufgaben wird durch die Merkmale des unabhängigen Anspruches gelöst.

Die Erfindung betrifft ein System zur spanenden Bearbeitung eines Werkstückes und zur Messung und Auswertung von Kraft und Drehmoment bei der spanenden Bearbeitung des Werkstückes; welches System eine Werkzeugmaschine zur spanenden Bearbeitung des Werkstückes mit einem Werkzeug, eine Vorrichtung zur Messung von Kraft und Drehmoment bei der spanenden Bearbeitung des Werkstückes und eine Auswerteeinheit zur Auswertung von Messwertdaten der Vorrichtung aufweist; welche Vorrichtung in der Werkzeugmaschine eingebaut ist und sich bei der spanenden Bearbeitung mit dem Werkzeug um eine Drehachse dreht; welche Auswerteeinheit ortsfest ist; welche Vorrichtung eine Messeinheit aufweist, welche Messeinheit unter der bei der spanenden Bearbeitung wirkenden Komponentenarten von Kraft und Drehmoment Messwerte erzeugt; welche Vorrichtung eine Kontrolleinheit aufweist, welche Kontrolleinheit die Messwerte als Messwertdaten drahtlos direkt an die Auswerteeinheit überträgt; wobei die drahtlose Übertragung der Messwertdaten mit einer Sendeleistung im Bereich von 0.1mW bis 10mW erfolgt.

Gemäss einem ersten Aspekt der Erfindung weist die Vorrichtung keine Statoreinheit und auch kein Anschlusskabel mehr in der Messkette zwischen Rotoreinheit und Auswerteeinheit auf, wie beim 4-Komponenten Dynamometer Typ 9170A. Vielmehr überträgt die Vorrichtung die Messwertdaten drahtlos direkt an die Auswerteeinheit. Die Messkette ist also drastisch verkürzt. Durch den Wegfall der Statoreinheit ist aber auch keine drahtlose Energieversorgung der Vorrichtung mehr möglich. Deshalb weist die Vorrichtung nach einem weiteren Aspekt der Erfindung im Vergleich zum 4-Komponenten Dynamometer Typ 9170A eine deutlich, um über eine Grössenordnung geringer Sendeleistung auf. Dadurch sinkt im Betrieb der Vorrichtung der Energieverbrauch um über eine Grössenordnung. Die Vorrichtung benötigt daher nur einen Energiespeicher von so kleinen äusseren Abmessungen und so geringem Gewicht, dass ein unterbrechungsfreier Betrieb des Systems von mindestens 8h möglich ist.

Bevorzugte Ausführungsformen der Erfindung werden in den abhängigen Ansprüchen beansprucht. Auch die Merkmale der abhängigen Ansprüche lösen zumindest eine der Aufgaben.

In einer bevorzugten Ausführungsform sind die Messwertdaten binäre Zahlenfolgen mit 16bit Auflösung.

Eine Auflösung der Messwerte mit 16bit ist deutlich detailgenauer als die Auflösung der Messwerte von 12bit beim 4-Komponenten Dynamometer Typ 9170A. Der Unterschied von 4bit entspricht einem Faktor 2⁴ oder 16.

In einer weiteren bevorzugten Ausführungsform erfolgt die drahtlose Übertragung der Messwertdaten mit einer Datenübertragungsrate von wahlweise 1Mbit/sec oder 2Mbit/sec; wobei die Auswerteeinheit die Datenübertragungsrate auswählt, mit welcher ausgewählten Datenübertragungsrate die drahtlose Übertragung der Messwertdaten erfolgt.

Eine hohe Datenübertragungsrate von 2Mbit/sec ist nicht immer nötig, oft reicht auch eine niedrige Datenübertragungsrate von 1Mbit/sec. Eine hohe Datenübertragungsrate ist bei einer grossen Menge an drahtlos zu übertragenen Messwertdaten nötig. Die hohe Datenübertragungsrate verursacht jedoch im Vergleich zur niedrigen Datenübertragungsrate einen mindestens 10% grösseren Energieverbrauch der Vorrichtung. Somit ermittelt die Auswerteeinheit, ob eine hohe Datenübertragungsrate tatsächlich nötig ist und hält so den Energieverbrauch der Vorrichtung gering.

In einer weiteren bevorzugten Ausführungsform weist die Auswerteeinheit eine Auswerte-Sende-/Empfangseinheit auf, welche Auswerte-Sende-/Empfangseinheit eine Antenne aufweist und über die Antenne die Messwertdaten als elektromagnetische Wellen von der Kontrolleinheit empfängt; wobei die Auswerte-Sende-/Empfangseinheit in einem eigenständigen Gehäuse angeordnet ist; und wobei das Gehäuse für die drahtlose Übertragung der Messwertdaten bezüglich der Kontrolleinheit räumlich ausrichtbar ist.

Dadurch, dass die Auswerte-Sende-/Empfangseinheit in einem eigenständigen Gehäuse angeordnet ist, welches von der Auswerteeinheit getrennt ist, lässt sich die Antenne der Auswerte-Sende-/Empfangseinheit einfach und rasch räumlich bezüglich einer Antenne der Kontrolleinheit ausrichten. Dadurch erfolgt die drahtlose Übertragung der Messwertdaten mit bestmöglich ausgerichteten Antennen und somit geringer Sendeleistung, was den Energieverbrauch der Vorrichtung gering hält und auch die Qualität der drahtlose Übertragung der Messwertdaten hoch hält, was wiederum die Genauigkeit der Messung von Kraft und Drehmoment erhöht.

In einer weiteren bevorzugten Ausführungsform weist die Auswerteeinheit einen temporären Datenspeicher auf; wobei die Auswerteeinheit von der Kontrolleinheit drahtlos übertragene Messwertdaten im temporären Datenspeicher speichert; und dass die Auswerteeinheit den temporären Datenspeicher wahlweise in einem Buffer-Modus oder in einem Streaming-Modus ausliest.

Im Buffer-Modus füllt die Auswerteeinheit den temporären Arbeitsspeicher für eine Zeitlang mit drahtlos übertragenen Messwertdaten und liest sie nach dem First In - First Out - Prinzip aus. Während der Füllzeit hat die Kontrolleinheit so die Möglichkeit nicht drahtlos übertragene Messwertdaten wiederholt zu übertragen, wodurch die Wahrscheinlichkeit steigt, dass die im First In - First Out - Prinzip ausgelesenen Messwertdaten vollständig sind. Es ist klar, dass vollständig übertragene Messwertdaten bei der Auswertung eine höhere Genauigkeit liefern, als unvollständig übertragene Messwertdaten. Wenn jedoch die Vollständigkeit der Messwertdaten bei der Auswertung nur von zweitrangiger Bedeutung ist, und eine zeitnahe Auswertung eine grössere Bedeutung hat, liest die Auswerteeinheit den temporären Arbeitsspeicher im Streaming-Modus zeitnah aus.

In noch einer weiteren bevorzugten Ausführungsform komprimiert die Kontrolleinheit die Messwertdaten bevor sie sie drahtlos an die Auswerteeinheit überträgt; und wobei die Auswerteeinheit die drahtlos übertragenen Messwertdaten dekomprimiert.

Durch die Kompression wird die Menge der Messwertwertdaten reduziert, sodass eine reduzierte Menge an Messwertdaten an die Auswerteeinheit drahtlos zu übertragen ist. Die reduzierte Menge an Messwertdaten benötigt eine niedrigen Datenübertragungsrate, was den Energieverbrauch der Vorrichtung gering hält.

In noch einer weiteren bevorzugten Ausführungsform überträgt die Kontrolleinheit die Messwertdaten ohne sie zu kalibrieren drahtlos an die Auswerteeinheit; wobei in der Auswerteeinheit Kalibrierdaten gespeichert sind; welche Kalibrierdaten einen Linearitätsfehler der Messwerte korrigieren; und wobei die Auswerteeinheit die drahtlos übertragenen Messwertdaten mit den Kalibrierdaten kalibriert.

Mit der Kalibrierung wird ein Linearitätsfehler der Messwerte korrigiert. Dadurch jedoch, dass die Auswerteeinheit die Kalibrierung der Messwerte vornimmt, verringert sich auch der Energieverbrauch der Vorrichtung.

In noch einer weiteren bevorzugten Ausführungsform ist eine Anzahl der Messkanäle, in denen die Messeinheit Messwerte erzeugt, einstellbar; auch die Komponentenarten von Kraft und Drehmoment, für die die Messeinheit Messwerte erzeugt, ist einstellbar; und wobei durch die Auswerteeinheit erfolgt eine Einstellung der Anzahl der Messkanäle und der Komponentenarten von Kraft und Drehmoment.

Eine Messung von Kraft und Drehmoment ist nicht immer mit allen zur Verfügung stehenden Messkanälen und auch nicht immer für alle Komponentenarten von Kraft und Drehmoment nötig. Je nach Art der spanenden Bearbeitung sind auch nur ein Teil der zur Verfügung stehenden Messkanäle ausreichend, um eine Überwachung der Qualität der spanenden Bearbeitung vorzunehmen. In dem Masse, in dem die Anzahl der zur Verfügung stehenden Messkanäle erniedrigt wird, reduziert sich auch der Energieverbrauch der Vorrichtung.

In noch einer weiteren bevorzugten Ausführungsform wandelt die Kontrolleinheit die Messwerte in verstärkte Messwerte eines Messbereiches; wobei der Messbereich in dem die verstärkten Messwerte liegen, einstellbar ist; wobei die Auswerteeinheit Steuerdaten mit einer Angabe des einzustellenden Messbereiches erzeugt; wobei die Auswerteeinheit die Steuerdaten mit der Angabe des einzustellenden Messbereiches drahtlos an die Prüfvorrichtung überträgt; und wobei die Prüfvorrichtung den einzustellenden Messbereich einstellt und die Messwerte in den eingestellten Messbereich wandelt.

Mit der Verstärkung der Messwerte werden die verstärkten Messwerte in einem Messbereich dargestellt. Für eine bestmögliche Darstellung der verstärkten Messwerte in einem Messbereich muss überprüft werden, ob die verstärkten Messwerte innerhalb von vordefinierten Grenzwerten des Messbereiches liegen. Dadurch nun, dass die Auswerteeinheit diese Überprüfung vornimmt, reduziert sich der Energieverbrauch der Vorrichtung.

### Kurze Beschreibung der Figuren

Im Folgenden wird die Erfindung beispielhaft unter Beizug der Figuren näher erklärt. Es zeigen
- Fig. 1: eine schematische Darstellung eines Teiles des Systems 100 mit einer Werkzeugmaschine 1, einer Vorrichtung 2 und einer Auswerteeinheit 3;
- Fig. 2: eine schematische Darstellung einer Kontrolleinheit 23 der Vorrichtung 2 aus Fig. 1; und
- Fig. 3: eine schematische Darstellung der Auswerteeinheit 3 aus Fig. 1.

### Wege zur Ausführung der Erfindung

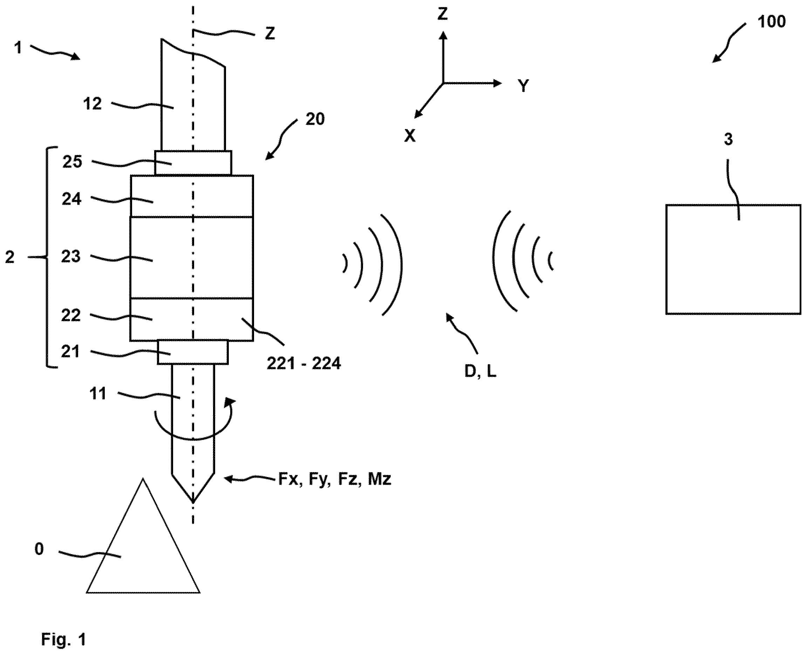

Fig. 1 zeigt ein System 100 zur spanenden Bearbeitung eines Werkstückes 0 und zur Messung und Auswertung von Kraft und Drehmoment bei der spanenden Bearbeitung des Werkstückes 0. Das System 100 weist eine Werkzeugmaschine 1 zur spanenden Bearbeitung des Werkstückes 0, eine Vorrichtung 2 zur Messung von Kraft und Drehmoment bei der spanenden Bearbeitung des Werkstückes 0 und eine Auswerteeinheit 3 zur Auswertung von Messwertdaten MD der Vorrichtung 2.

Die Werkzeugmaschine 1 ist in Fig. 1 nur zum Teil dargestellt. Zu sehen sind ein Werkzeug 11 und eine Spindel 12. Die Spindel 12 dreht sich bei der spanenden Bearbeitung des Werkstückes 0 um eine Drehachse Z. Ein Antrieb zum Antreiben der Spindel 12 ist nicht dargestellt.

Die Vorrichtung 2 ist in der Werkzeugmaschine 1 eingebaut. Die Vorrichtung 2 weist einen Werkzeugadapter 21 und einen Spindeladapter 25 auf. Über den Werkzeugadapter 21 ist das Werkzeug 11 an der Vorrichtung 2 befestigt und über den Spindeladapter 25 ist die Vorrichtung 2 an der Spindel 12 befestigt. Werkzeug 11, Vorrichtung 2 und Spindel 12 sind starr miteinander verbunden und drehen sich um eine Drehachse Z. Die Drehung von Werkzeug 11, Vorrichtung 2 und Spindel 12 um die Drehachse Z ist in Fig. 1 als gekrümmter Pfeil dargestellt.

Die Vorrichtung 2 weist ein Gehäuse 20 auf. Der Werkzeugadapter 21 und der Spindeladapter 25 sind aussenseitig am Gehäuse 20 befestigt. Vorzugsweise weist der Spindeladapter 25 eine Schnellkupplung auf, damit die Befestigung der Vorrichtung 2 mit der Spindel 12 rasch innerhalb von Sekunden von der Spindel 12 gelöst und wieder bewerkstelligt werden kann.

Das Gehäuse 20 weist einen Hohlraum auf. Die Vorrichtung 2 weist eine Messeinheit 22, eine Kontrolleinheit 23 und eine Energiespeichereinheit 24 auf. Die Messeinheit 22, die Kontrolleinheit 23 und der Energiespeichereinheit 24 sind im Hohlraum angeordnet. Das Gehäuse 20 ist mechanisch stabil und gegen Flüssigkeit dicht gebaut und schützt so die Messeinheit 22, die Kontrolleinheit 23 und die Energiespeichereinheit 24 vor bei der spanenden Bearbeitung auftretenden äusseren Einflüssen wie Kühlflüssigkeit, Späne, usw.

Die Vorrichtung 2 misst drei Komponentenarten von Fx, Fy, Fz der Kraft und eine Komponentenart Mz vom Drehmoment. Eine erste Komponentenart Fx der Kraft wirkt entlang einer Längsachse X, eine zweite Komponentenart Fy der Kraft entlang einer Querachse Y, eine dritte Komponentenart Fz der Kraft wirkt entlang der Drehachse Z und die Komponentenart Mz vom Drehmoment wirkt um die Drehachse Z. Die drei Achsen X, Y, Z stehen senkrecht aufeinander. Die drei Komponentenarten Fx, Fy, Fz der Kraft und die Komponentenart Mz vom Drehmoment werden nachfolgend auch einfach als Komponentenarten Fx, Fy, Fz, Mz von Kraft und Drehmoment bezeichnet.

Die eigentliche Messung der Komponentenarten Fx, Fy, Fz, Mz von Kraft und Drehmoment erfolgt durch die Messeinheit 22. Es ist die Messeinheit 22, welche unter der Wirkung der zu messenden Komponentenarten Fx, Fy, Fz, Mz von Kraft und Drehmoment Messwerte P erzeugt. Die Messwerte P sind analoge Signale. Die Messwerte P sind weitgehend proportional zur Grösse der Komponentenarten Fx, Fy, Fz, Mz von Kraft und Drehmoment.

Die Messeinheit 22 weist mehrere Aufnehmer 221 - 224 auf. Die Aufnehmer 221 - 224 sind unabhängig voneinander. Im Sinne der Erfindung bedeutet die Eigenschaft "voneinander unabhängig", dass sich die Aufnehmer 221 - 224 untereinander nicht beeinflussen und dass sie auch nicht voneinander abhängig sind. So weist die Messeinheit 22 einen ersten Aufnehmer 221 auf, welcher unter der Wirkung der ersten Komponentenart Fx der Kraft Messwerte P erzeugt, sie weist einen zweiten Aufnehmer 222 auf, welcher unter der Wirkung der zweiten Komponentenart Fy der Kraft Messwerte P erzeugt, sie weist einen dritten Aufnehmer 223 auf, welcher unter der Wirkung zur Messung der dritten Komponentenart Fz der Kraft Messwerte P erzeugt und sie weist einen vierten Aufnehmer 224 auf, welcher unter der Wirkung der Komponentenart Mz vom Drehmoment Messwerte P erzeugt.

Die Messeinheit 22 erzeugt die Messwerte P in mehreren Messkanälen K1 - K4. Die Messkanäle K1 - K4 sind voneinander unabhängig. Auch hier bedeutet die Eigenschaft "voneinander unabhängig" im Sinne der Erfindung, dass sich Messkanäle K1 - K4 untereinander nicht beeinflussen und dass sie auch voneinander nicht abhängig sind. Die Messkanäle K1 - K4 sind den Aufnehmern 221 - 224 zugeordnet. Der erste Aufnehmer 221 erzeugt Messwerte P in einem ersten Messkanal K1, der zweite Aufnehmer 222 erzeugt Messwerte P in einem zweiten Messkanal K2, der dritte Aufnehmer 223 erzeugt Messwerte P in einem dritten Messkanal K3, und der vierte Aufnehmer 224 erzeugt Messwerte P in einem vierten Messkanal K4. Somit ist jeder Komponentenart Fx, Fy, Fz, Mz von Kraft und Drehmoment auf eineindeutige Weise ein Messkanal K1 - K4 zugeordnet.

Eine Abweichung von der Proportionalität zwischen dem Messwert P und dem richtigen Wert nach DIN 1319-1 (der Grösse der Komponentenarten Fx, Fy, Fz, Mz von Kraft und Drehmoment) wird als Linearitätsfehler bezeichnet. Der Linearitätsfehler liegt im Bereich von 5% bis 10%. Der Linearitätsfehler ist für jede Komponentenart Fx, Fy, Fz, Mz von Kraft und Drehmoment unterschiedlich stark ausgeprägt.

Vorzugsweise sind die Aufnehmer 221 - 224 piezoelektrische Aufnehmer 221 - 224. Die piezoelektrischen Aufnehmer 221 - 224 erzeugen unter der Wirkung der Komponentenarten Fx, Fy, Fz, Mz von Kraft und Drehmoment Messwerte P in Form von elektrischen Polarisationsladungen P1 - P4. Die Anzahl der elektrischen Polarisationsladungen P1 - P4 ist weitgehend proportional zur Grösse der Komponentenarten Fx, Fy, Fz, Mz von Kraft und Drehmoment. Der erste piezoelektrische Aufnehmer 221 erzeugt im ersten Messkanal K1 erste elektrische Polarisationsladungen P1, der zweite piezoelektrische Aufnehmer 222 erzeugt im zweiten Messkanal K2 zweite elektrische Polarisationsladungen P2, der dritte piezoelektrische Aufnehmer 223 erzeugt im dritten Messkanal K3 dritte elektrische Polarisationsladungen P3 und der vierte piezoelektrische Aufnehmer 224 erzeugt im vierten Messkanal K4 vierte elektrische Polarisationsladungen P4.

Alternativ weist die Messeinheit 22 mehrere Aufnehmer 221 - 224 zur Messung von Kraft und Drehmoment auf, welche nach einen anderen Messprinzip als die Piezoelektrizität funktionieren, wie piezoresistive Aufnehmer, Dehnmessstreifen (DMS), usw. Diese Aufnehmer 221 - 224 erzeugen Messwerte P in Form von elektrischen Spannungen.

Piezoelektrische Aufnehmer 221 - 224 ermöglichen eine hohe Abtastrate. Vorzugsweise liegt die Abtastrate der piezoelektrischen Aufnehmer 221 - 224 in jedem Messkanal K1 - K4 in einem Bereich von 5kHz bis 10kHz, welche Abtastrate um einen Faktor fünf grösser ist als bei DMS-Aufnehmern 221 - 224. Auch haben Messwertdaten MP die von piezoelektrischen Aufnehmer 221 - 224 stammen im Vergleich zu solchen von DMS-Aufnehmern 221 - 224 eine um einen Faktor zehn bessere Auflösung bei Kraft-/Zeit-Diagrammen, Drehmoment-/Zeit-Diagrammen und auch bei Kraft-Polardiagrammen.

Die Energiespeichereinheit 24 weist mindestens einen Speicher für elektrische Energie wie einen wiederaufladbaren Akkumulator, eine nicht wiederaufladbare Batterie, usw. auf. Vorzugsweise ist die Energiespeichereinheit 24 eine Lithium-Ionen Akkumulator, ein Lithium-Polymer-Akkumulator, eine Zink-Luft-Batterie, usw. Die Energiespeichereinheit 24 ist klein dimensioniert und weist ein geringes Gewicht auf.

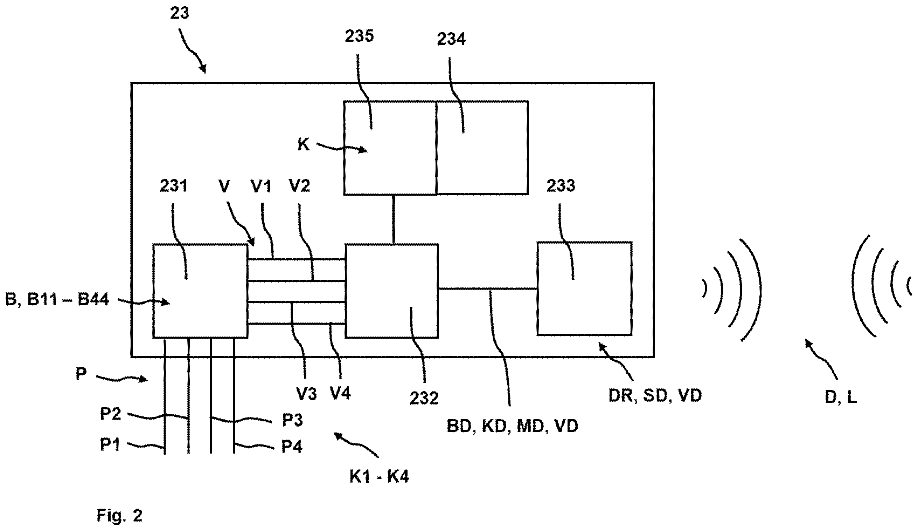

Fig. 2 zeigt Details der Kontrolleinheit 23. Die Kontrolleinheit 23 weist mindestens eine Kontroll-Spannungs-Wandlereinheit 231, mindestens eine Kontroll-Analog-/Digital-Wandlereinheit 232, mindestens eine Kontroll-Sende-/Empfangseinheit 233, mindestens einen Kontroll-Datenspeicher 234 und mindestens einen Kontroll-Datenprozessor 235 auf.

Die Kontroll-Spannungs-Wandlereinheit 231 ist mit der Messeinheit 22 über mehrere erste elektrische Leitungen verbunden. Die Kontroll-Analog-/Digital-Wandlereinheit 232 ist mit der Kontroll-Spannungs-Wandlereinheit 231 über mehrere weitere elektrische Leitungen verbunden.

Die Kontrolleinheit 23 wandelt die Messwerte P der Messeinheit 22 in Messwertdaten MD. Dazu übermittelt die Messeinheit 22 die Messwerte P über die ersten elektrischen Leitungen an die Kontroll-Spannungs-Wandlereinheit 231. Die Kontroll-Spannungs-Wandlereinheit 231 wandelt die Messwerte P in verstärkte Messwerte V. Die Kontroll-Spannungs-Wandlereinheit 231 übermittelt die verstärkten Messwerte V über die weiteren elektrischen Leitungen an die Kontroll-Analog-/Digital-Wandlereinheit 232. Die Kontroll-Analog-/Digital-Wandlereinheit 232 digitalisiert die verstärkten Messwerte V in Messwertdaten KD.

Die Messwertdaten KD sind binäre Zahlenfolgen mit vorzugsweise 16bit Auflösung pro Messkanal K1 - K4.

Vorzugsweise sind die verstärkten Messwerte V elektrische Spannungen V1 - V4. Im ersten Messkanal K1 übermittelt die Kontroll-Spannungs-Wandlereinheit 231 erste elektrische Spannungen V1 über eine erste elektrische Zuleitung an die Kontroll-Analog-/Digital-Wandlereinheit 232, die Kontroll-Analog-/Digital-Wandlereinheit 232 digitalisiert sie in Messwertdaten KD. Im zweiten Messkanal K2 übermittelt die Kontroll-Spannungs-Wandlereinheit 231 zweite elektrische Spannungen V2 über eine zweite elektrische Zuleitung an die Kontroll-Analog-/Digital-Wandlereinheit 232, die Kontroll-Analog-/Digital-Wandlereinheit 232 digitalisiert sie in Messwertdaten KD. Im dritten Messkanal K3 übermittelt die Kontroll-Spannungs-Wandlereinheit 231 dritte elektrische Spannungen V3 über eine dritte elektrische Zuleitung an die Kontroll-Analog-/Digital-Wandlereinheit 232, die Kontroll-Analog-/Digital-Wandlereinheit 232 digitalisiert sie in Messwertdaten KD. Im vierten Messkanal K4 übermittelt die Kontroll-Spannungs-Wandlereinheit 231 vierte elektrische Spannungen V4 über eine vierte elektrische Zuleitung an die Kontroll-Analog-/Digital-Wandlereinheit 232, die Kontroll-Analog-/Digital-Wandlereinheit 232 digitalisiert sie in Messwertdaten KD.

Die Kontrolleinheit 23 erzeugt Messkanaldaten KD, welche den Messkanal K1 - K4 eineindeutig bezeichnen, in dem die Messeinheit 22 Messwerte K erzeugt hat. Dazu erzeugt die Kontroll-Analog-/Digital-Wandlereinheit 232 digitale Messkanaldaten KD, welche den Messkanal K1 - K4 eineindeutig bezeichnen, für den sie verstärkte Messwerte V in Messwertdaten PD digitalisiert hat.

Die Kontrolleinheit 23 verstärkt die Messwerte P in verstärkte Messwerte V, welche in einem Messbereich B liegen. Der Messbereich B in dem die verstärkten Messwerte V liegen, ist einstellbar. Die Kontrolleinheit 23 erzeugt Messbereichsdaten BD, welche den Messbereich B eineindeutig bezeichnen, in welchen die verstärkten Messwerte V liegen. Die Kontroll-Spannungs-Wandlereinheit 231 erzeugt analoge Messbereichssignale B11 - B44, welche den Messbereich B eineindeutig bezeichnen, in dem die verstärkten Messwerte V liegen. Jedem Messbereich B ist ein Messbereichssignale B11 - B44 zugeordnet. Die Kontroll-Spannungs-Wandlereinheit 231 übermittelt die Messbereichssignale B11 - B44 über die weiteren elektrischen Leitungen an die Kontroll-Analog-/Digital-Wandlereinheit 232. Die Kontroll-Analog-/Digital-Wandlereinheit 232 digitalisiert die Messbereichssignale B11 - B44 in Messbereichsdaten BD.

Vorzugsweise stellt die Kontroll-Spannungs-Wandlereinheit 231 im ersten Messkanal K1 die erste Komponentenart Fx der Kraft in einem ersten Messbereich B11 von 500N Endwert, in einem zweiten Messbereich B12 von 1kN Endwert, in einem dritten Messbereich B13 von 2.5kN Endwert und in einem vierten Messbereich B14 von 5kN Endwert dar. Vorzugsweise stellt die Kontroll-Spannungs-Wandlereinheit 231 im zweiten Messkanal K2 die zweite Komponentenart Fy der Kraft in einem ersten Messbereich B21 von 500N Endwert, in einem zweiten Messbereich B22 von 1kN Endwert, in einem dritten Messbereich B23 von 2.5kN Endwert und in einem vierten Messbereich B24 von 5kN Endwert dar. Vorzugsweise stellt die Kontroll-Spannungs-Wandlereinheit 231 im dritten Messkanal K3 die dritte Komponentenart Fz der Kraft in einem ersten Messbereich B31 von 2.5kN Endwert, in einem zweiten Messbereich B32 von 5kN Endwert, in einem dritten Messbereich B33 von 10kN Endwert und in einem vierten Messbereich B34 von 20kN Endwert dar. Vorzugsweise stellt die Kontroll-Spannungs-Wandlereinheit 231 im vierten Messkanal K4 die Komponentenart Mz vom Drehmoment in einem ersten Messbereich B41 von 10Nm Endwert, in einem zweiten Messbereich B42 von 20Nm Endwert, in einem dritten Messbereich B43 von 50Nm Endwert und in einem vierten Messbereich B44 von 100Nm Endwert dar.

Vorzugsweise übermittelt die Messeinheit 22 Messwerte P in Form von elektrischen Polarisationsladungen P1 - P4 in vier Messkanälen K1 - K4 gleichzeitig an die Kontroll-Spannungs-Wandlereinheit 231. Die Kontroll-Spannungs-Wandlereinheit 231 wandelt die elektrischen Polarisationsladungen P1 - P4 gleichzeitig in den vier Messkanälen K1 - K4 in verstärkte Messwerte V in Form von elektrischen Spannungen V1 - V4.

Im ersten Messkanal K1 übermittelt der erste piezoelektrische Aufnehmer 221 über eine erste elektrische Zuleitung erste elektrische Polarisationsladungen P1 an die Kontroll-Spannungs-Wandlereinheit 231, die Kontroll-Spannungs-Wandlereinheit 231 wandelt sie in erste elektrische Spannungen V1. Im zweiten Messkanal K2 übermittelt der zweite piezoelektrische Aufnehmer 222 über eine zweite elektrische Zuleitung zweite elektrische Polarisationsladungen P2 an die Kontroll-Spannungs-Wandlereinheit 231, die Kontroll-Spannungs-Wandlereinheit 231 wandelt sie in zweite elektrische Spannungen V2. Im dritten Messkanal K3 übermittelt der dritte piezoelektrische Aufnehmer 223 über eine dritte elektrische Zuleitung dritte elektrische Polarisationsladungen P3 an die Kontroll-Spannungs-Wandlereinheit 231, die Kontroll-Spannungs-Wandlereinheit 231 wandelt sie in dritte elektrische Spannungen V3. Im vierten Messkanal K4 übermittelt der vierte piezoelektrische Aufnehmer 224 über eine vierte elektrische Zuleitung vierte elektrische Polarisationsladungen P4 an die Kontroll-Spannungs-Wandlereinheit 231, die Kontroll-Spannungs-Wandlereinheit 231 wandelt sie in vierte elektrische Spannungen V4.

Die Kontrolleinheit 23 weist mindestens ein Kontrollprogramm K auf, welches im Kontroll-Datenspeicher 234 gespeichert und in den Kontroll-Datenprozessor 235 ladbar ist. Das in den Kontroll-Datenprozessor 235 geladene Kontrollprogramm K erzeugt Befehle, welche Befehle von der Kontrolleinheit 23 automatisch ausgeführt werden. Im Sinne der Erfindung hat das Adjektiv "automatisch" die Bedeutung, dass die vom Kontrollprogramm K erzeugten Befehle von der Kontrolleinheit 23 ohne Mitwirkung einer menschlichen Person ausgeführt werden.

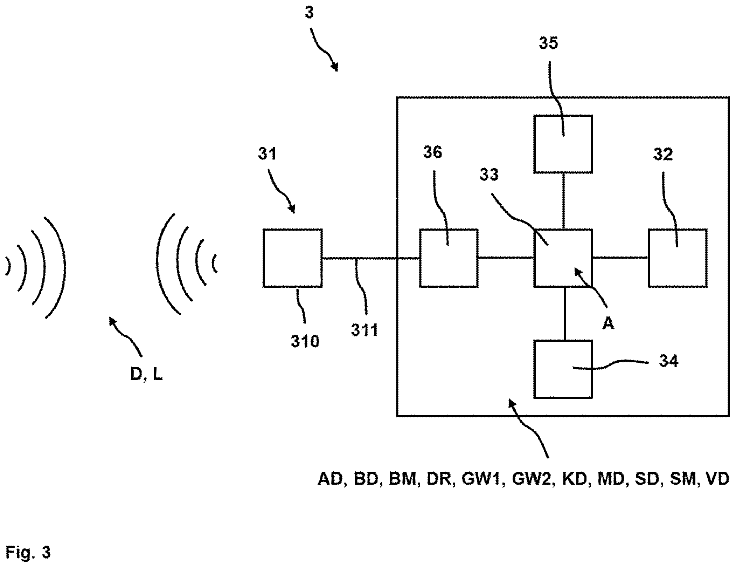

Die Auswerteeinheit 3 wertet die Messwertdaten PD, die Messkanaldaten KD und die Messbereichsdaten BD aus und sie erzeugt Steuerdaten SD zur Ansteuerung der Vorrichtung 2. Die Steuerdaten SD sind digitale Daten. Eine solche Auswerteeinheit 3 wird von der Anmelderin als Datenerfassungsgerät LabAmp Typ 5165A gemäss dem Datenblatt 5165A_003-146d-10.20 vertrieben. Fig. 3 zeigt Details der Auswerteeinheit 3 auf. Die Auswerteeinheit 3 weist eine Auswerte-Sende-/Empfangseinheit 31, mindestens einen Auswerte-Datenspeicher 32, mindestens einen Auswerte-Datenprozessor 33, mindestens eine Eingabe-/Empfangseinheit 34, mindestens eine Ausgabeeinheit 35 und mindestens einen temporären Datenspeicher 36 auf.

Die Kontrolleinheit 23 überträgt die Daten D drahtlos an die Auswerteeinheit 3 und auch die Auswerteeinheit 3 überträgt die Daten D drahtlos an die Kontrolleinheit 23. Die drahtlose Datenübertragung zwischen der Kontrolleinheit 23 und der Auswerteeinheit 3 ist bidirektional. Bei der drahtlosen Datenübertragung werden Daten D als elektromagnetische Wellen gesendet und empfangen. Dazu weist die Kontroll-Sende-/Empfangseinheit 233 eine Antenne zum Senden und Empfangen von Daten D auf und die Auswerte-Sende-/Empfangseinheit 31 weist eine Antenne zum Senden und Empfangen von Daten D auf. Die drahtlose Übertragung der Daten D ist in den Fig. 1 bis 3 als gekrümmte Kreissegmente dargestellt.

Die Kontrolleinheit 23 und die Auswerteeinheit 3 übertragen die Daten D drahtlos mit einer Sendeleistung L im Bereich von 0.1mW bis 10mW. Eine Reichweite der drahtlosen Übertragung der Daten D zwischen der Kontrolleinheit 23 und die Auswerteeinheit 3 ist kleiner/gleich 10m.

Vorzugsweise ist die Auswerte-Sende-/Empfangseinheit 31 in einem eigenständigen Gehäuse 310 in Form eines Steckers angeordnet. Im Sinne der Erfindung bedeutet das Adjektiv "eigenständig", dass das Gehäuse 310 räumlich von einem Gehäuse der Auswerteeinheit 3 getrennt ist. Im Gehäuse der Auswerteeinheit 3 ist eine Schnittstelle wie Universal Serial Bus (USB), usw. Über die Schnittstelle ist die Auswerte-Sende-/Empfangseinheit 31 mit der Auswerteeinheit 3 elektrisch und mechanisch verbindbar. Über die Schnittstelle übermittelt die Auswerte-Sende-/Empfangseinheit 31 empfangene Daten D an die Auswerteeinheit 3 und wird von der Auswerteeinheit 3 mit elektrischer Energie versorgt. Beispielsweise ist die Auswerte-Sende-/Empfangseinheit 31 dazu über eine elektrische Leitung 311 mit der Schnittstelle im Gehäuse der Auswerteeinheit 3 verbunden.

Die von der Kontroll-Sende-/Empfangseinheit 233 an die Auswerte-Sende-/Empfangseinheit 31 gesendeten Daten D umfassen die folgenden Kategorien: Verbindungsdaten VD, Messwertdaten MD, Messkanaldaten K und Messbereichsdaten BD. Die Auswerte-Sende-/Empfangseinheit 31 empfängt die Daten D von der Kontroll-Sende-/Empfangseinheit 233. Die von der Auswerte-Sende-/Empfangseinheit 31 an die Kontroll-Sende-/Empfangseinheit 233 gesendeten Daten D umfassen die folgenden Kategorien: Verbindungsdaten VD und Steuerdaten SD. Die Kontroll-Sende-/Empfangseinheit 233 empfängt die Daten D von der Auswerte-Sende-/Empfangseinheit 3.

In der Auswerteeinheit 3 ist mindestens ein Auswerteprogramm A im Auswerte-Datenspeicher 32 gespeichert und in den Auswerte-Datenprozessor 33 ladbar. Das in den Auswerte-Datenprozessor 33 geladene Auswerteprogramm A erzeugt Befehle, welche Befehle von der Auswerteeinheit 3 automatisch ausgeführt werden. Im Sinne der Erfindung hat das Adjektiv "automatisch" die Bedeutung, dass die vom Auswerteprogramm A erzeugten Befehle von der Auswerteeinheit 3 ohne Mitwirkung einer menschlichen Person ausgeführt werden.

Die Auswerteeinheit 3 ist über die Eingabe-/Empfangseinheit 34 bedienbar. Im Sinne der Erfindung bedeutet das Verb "Bedienen", dass eine menschliche Person über die Eingabe-/Empfangseinheit 34 Befehle geben kann, welche Befehle von der Auswerteeinheit 3 ausgeführt werden. Die Eingabe-/Empfangseinheit 34 kann eine Tastatur zur Eingabe von Befehlen, eine Antenne zum Empfang von Befehlen, usw. sein. Über die Tastatur werden Befehle als Zeichenfolge eingegeben und die Auswerteeinheit 3 erzeugt dafür Steuerdaten SD. Über die Antenne werden die Befehle als elektromagnetische Wellen empfangen und die Auswerteeinheit 3 erzeugt dafür Steuerdaten SD. Die Ausgabeeinheit 35 kann ein Bildschirm sein, auf dem Daten für die menschliche Person graphisch darstellbar sind. So können auf der Ausgabeeinheit 35 ausgewertete Daten D graphisch dargestellt werden.

Vorzugsweise übertragen die Kontrolleinheit 23 und die Auswerteeinheit 3 die Daten D drahtlos im Industrial Scientific and Medical (ISM)-Band von 2.402GHz bis 2.480GHz.

Vorzugsweise übertragen die Kontrolleinheit 23 und die Auswerteeinheit 3 die Daten D im ISM-Band drahtlos in mehreren Übertragungskanälen. So verwenden die Kontrolleinheit 23 und die Auswerteeinheit 3 im ISM-Band 40 Übertragungskanäle, von denen jeder einzelne Übertragungskanal eine Bandbreite von 2MHz aufweist.

Vor einer drahtlosen Übertragung der Daten D bauen die Kontrolleinheit 23 und die Auswerteeinheit 3 eine Verbindung auf. Drei der 40 Übertragungskanäle sind Anmeldekanäle. In den drei Anmeldekanälen senden und empfangen die Kontroll-Sende-/Empfangseinheit 233 und die Auswerte-Sende-/Empfangseinheit 31 zum Aufbau einer Verbindung Verbindungsdaten VD. Dabei wird nach dem Master/Slave-Prinzip vorgegangen. Entweder sendet die Kontroll-Sende-/Empfangseinheit 233 oder die Auswerte-Sende-/Empfangseinheit 31 über Verbindungsdaten VD eine Anfrage nach einem Verbindungsaufbau und ist damit der Master. Die angefragte Kontroll-Sende-/Empfangseinheit 233 oder Auswert-Sende-/Empfangseinheit 31 empfängt die Verbindungsdaten VD zur Anfrage nach einem Verbindungsbau und ist dann der Slave. Der Slave sendet über Verbindungsdaten VD eine Bestätigung des Verbindungsaufbaus an den Master. Der Master empfängt die Bestätigung des Verbindungsaufbaus vom Slave.

37 der 40 Übertragungskanäle sind Datenkanäle, über welche nach einem erfolgreichen Aufbau der Verbindung die drahtlose Übertragung der Daten D erfolgt. Die Kontroll-Sende-/Empfangseinheit 233 und die Auswerte-Sende-/Empfangseinheit 31 senden und empfangen die Daten D als Master und Slave. Der Master sendet Pakete in den 37 Datenkanälen, der Slave empfängt Pakete in den 37 Datenkanälen. Pro Paket werden 296bits bis 2040bits an Daten D gesendet und empfangen.

Zur Vermeidung von Interferenzen zwischen den Paketen verwenden die Kontroll-Sende-/Empfangseinheit 233 und die Auswerte-Sende-/Empfangseinheit 31 ein Frequenzsprungverfahren oder Frequency Hopping Spread Spectrum (FHSS) und wechseln nach jeder drahtlosen Übertragung eines Pakets auf einen anderen der 37 Übertragungskanäle.

Die Kontrolleinheit 23 bzw. die Auswerteeinheit 3 überprüfen, ob alle drahtlos zu übertragenden Pakete tatsächlich drahtlos übertragen worden sind. Dazu hat jedes Paket eine Paketidentifikationsnummer. Für jedes vom Master empfangene Paket liest der Slave die Paketidentifikationsnummer ein und sendet Verbindungsdaten VD mit einer Bestätigung des Empfanges an den Master. Die Bestätigung des Empfanges beinhaltet die Paketidentifikationsnummer des empfangenen Paketes. Der Master empfängt die Verbindungsdaten VD mit der Bestätigung des Empfanges und liest die Paketidentifikationsnummer des empfangenen Paketes ein. Nicht drahtlos übertragene Pakete werden vom Slave wiederholt drahtlos übertragen. Dazu führt der Master eine Liste der Paketidentifikationsnummern der von ihm gesendeten Pakete und eine Liste der Paketidentifikationsnummern der vom Slave empfangenen Paketen. Der Master vergleicht die beiden Listen. Vom Master gesendete Pakete, für welche keine Paketidentifikationsnummern von vom Slave empfangenen Paketen aufgelistet sind, sendet der Master wiederholt an den Slave.

Die Auswerteeinheit 3 erzeugt Steuerdaten SD zur Ansteuerung der Vorrichtung 2 somit auf Befehl des Auswerteprogrammes A oder auf Befehl der Eingabe-/Empfangseinheit 34. Die Steuerdaten SD führen vielfältige Befehle aus. So lässt sich mit den Steuerdaten SD die Vorrichtung 2 starten oder stoppen. Dazu erzeugt die Auswerteeinheit 3 Steuerdaten SD mit Angaben zum Starten oder Stoppen und überträgt die Steuerdaten SD an die Kontrolleinheit 23. Hierzu sendet die Auswerte-Sende-/Empfangseinheit 31 die Steuerdaten SD mit den Angaben zum Starten oder Stoppen an die Kontroll-Sende-/Empfangseinheit 233. Die Kontroll-Sende-/Empfangseinheit 233 empfängt die Steuerdaten SD mit den Angaben zum Starten oder Stoppen. Die Kontrolleinheit 23 startet oder stoppt die Vorrichtung 2 gemäss den Angaben zum Starten oder Stoppen der Steuerdaten SD.

Vorzugsweise übertragen die Kontrolleinheit 23 und die Auswerteeinheit 3 die Daten D drahtlos mit einer Datenübertragungsrate DR von wahlweise 1Mbit/sec oder 2Mbit/sec. Die Auswerteeinheit 3 wählt eine Datenübertragungsrate DR aus, mit welcher ausgewählten Datenübertragungsrate DR die drahtlose Übertragung der Daten D erfolgt.

Vorzugsweise ermittelt die Auswerteeinheit 3 bereits beim Aufbau der Verbindung zur drahtlose Übertragung der Daten D, welche Menge an Daten D wahrscheinlich von der Vorrichtung 2 drahtlos übertragen werden wird. Vorzugsweise ermittelt die Auswerteeinheit 3 eine durchschnittliche Datenübertragungsrate der letzten drahtlosen Übertragungen von Daten D. Die Auswerteeinheit 3 wählt daraufhin aus den beiden Datenübertragungsraten DR diejenige aus, welche die durchschnittliche Datenübertragungsrate erfüllt. Wenn beide Datenübertragungsraten DR die durchschnittliche Datenübertragungsrate erfüllen, wählt die Auswerteeinheit 3 die kleinere Datenübertragungsrate DR von 1Mbit/sec aus. Die Auswerteeinheit 3 überträgt die Verbindungsdaten VD mit Angabe der ausgewählten Datenübertragungsrate DR drahtlos an die Kontrolleinheit 23. Dazu sendet die Auswerte-Sende-/Empfangseinheit 31 Verbindungsdaten VD mit Angaben der ausgewählten Datenübertragungsrate DR an die Kontroll-Sende-/Empfangseinheit 233. Die Kontroll-Sende-/Empfangseinheit 233 empfängt die Verbindungsdaten VD mit den Angaben zur ausgewählten Datenübertragungsrate DR. Die Kontroll-Sende-/Empfangseinheit 233 sendet daraufhin die Messwertdaten MD mit der ausgewählten Datenübertragungsrate DR an die Auswerte-Sende-/Empfangseinheit 31.

Vorzugsweise führt die Kontrolleinheit 23 nach der Digitalisierung der Messwerte P zu Messwertdaten MD eine Komprimierung der Messwertwertdaten MD durch. Vorzugsweise werden bei der Kompression der Messwertdaten MD redundante Informationen in den Messwertdaten MD entfernt. Durch die Kompression wird die Menge der Messwertwertdaten MD reduziert, sodass eine reduzierte Menge an Messwertdaten MD an die Auswerteeinheit 3 drahtlos zu übertragen ist. Die Kontroll-Sende-/Empfangseinheit 233 sendet die komprimierten Messwertdaten MD an die Auswerte-Sende-/Empfangseinheit 31.

Vorzugsweise führt die Kontrolleinheit 23 nach der Digitalisierung der Messwerte P zu Messwertdaten MD keine Kalibrierung der Messwertwertdaten MD durch. Mit der Kalibrierung wird der Linearitätsfehler der Messwerte P korrigiert. Bei elektrischen Polarisationsladungen P1 - P4 von piezoelektrischen Aufnehmern beträgt der Linearitätsfehler immerhin 10%. Die Kontroll-Sende-/Empfangseinheit 233 sendet nichtkalibrierte Messwertdaten MD an die Auswerte-Sende-/Empfangseinheit 31.

Die Auswerteeinheit 3 speichert von der Kontrolleinheit drahtlos übertragene Daten D im temporären Datenspeicher 36. Vorzugsweise speichert die Auswerteeinheit 3 von der Kontrolleinheit drahtlos übertragene Daten D wie Messwertdaten MD, Messkanaldaten KD und Messbereichsdaten BD im temporären Datenspeicher 36. Vorzugsweise ist der temporäre Datenspeicher 36 so gross bemessen, dass er auch bei einer Datenübertragungsrate DR von 2Mbit/sec erst nach einer Füllzeit von mehreren 0.1sec mit Daten D gefüllt ist. So kann die Auswerteeinheit 3 die im temporären Datenspeicher 36 gespeicherten Daten D wahlweise in einem Buffer-Modus BM oder in einem Streaming-Modus BM auslesen. Im Buffer-Modus BM speichert die Auswerteeinheit 3 die Daten D eine Zeitlang im temporäre Datenspeicher 36. Der temporäre Datenspeicher 36 wird wie ein Schieberegister betrieben. Die Daten D werden aus ihm nach dem First In - First Out - Prinzip ausgelesen. Im Buffer-Modus BM erhält die Kontrolleinheit 23 so die Möglichkeit nicht drahtlos übertragene Daten D wiederholt zu übertragen. Im Streaming-Modus SM liest die Auswerteeinheit 3 die Daten D zeitnah nach dem Speichern im temporären Datenspeicher 36 auch gleich wieder aus. Im Streaming-Modus SM kann die Auswerteeinheit 3 eine zeitnahe Auswertung der Daten D vornehmen, was gerade bei Regelungsvorgängen der Werkzeugmaschine 1 von Bedeutung ist, wo die Auswerteeinheit 3 eine Abweichung von einem Kraftmittelwert oder das Überschreiten eines vordefinierten Sollwertes permanent überwacht und eine rasche Regelung von Vorteil ist.

Eine Dekomprimierung der Messwertdaten MD erfolgt nach der drahtlosen Übertragung in der Auswerteeinheit 3. Die Auswerteeinheit 3 dekomprimiert die in den Auswerte-Datenprozessor 33 geladenen Messwertdaten MD. Bei der Dekomprimierung fügt die Auswerteeinheit 3 entfernte redundante Informationen in den Messwertdaten MD wieder hinzu. Die Aufnehmereinheit 3 speichert die dekomprimierten Messwertdaten MD im Auswerte-Datenspeicher 32 ab.

Eine Kalibrierung der Messwertdaten PD erfolgt nach der drahtlosen Übertragung der Messwertdaten PD in der Auswerteeinheit 3. Dazu sind im Auswerte-Datenspeicher 32 Kalibrierdaten AD gespeichert. Die Kalibrierdaten AD sind spezifisch für den Messkanal K1 - K4. Die Kalibrierdaten AD sind in einem gesonderten Kalibriervorgang erzeugt worden. Bei dem Kalibriervorgang werden für jeden Messkanal K1 - K4 die Messwerte P der Messeinheit 22 mit Messwerten eines Referenzaufnehmers verglichen. Das Ergebnis des Vergleichs wird als Kalibrierdaten AD im Datenspeicher 33 gespeichert. Ein solcher Kalibriervorgang erfolgt in Zeitabständen von ein oder zwei Jahren.

Die Auswerteeinheit 3 lädt Kalibrierdaten AD aus dem Auswerte-Datenspeicher 32 in den Auswerte-Datenprozessor 33. Die Auswerteeinheit 3 ordnet die Kalibrierdaten KD den Messwertdaten MD und Messkanaldaten KD zu. Die Aufnehmereinheit 3 kalibriert die Messwertdaten MD spezifisch für jeden Messkanal K1 - K4 mit den zugeordneten Kalibrierdaten AD. Beispielsweise führt die Auswerteeinheit 3 bei der Kalibrierung der Messwertdaten MD mit zugeordneten Kalibrierdaten AD spezifisch für jeden Messkanal K1 - K4 eine Multiplikation von einzelnen Messwertdaten MD mit einzelnen Kalibrierdaten AD durch. Mit der Kalibrierung wird der Linearitätsfehler der Messwerte P korrigiert. Für vorzugsweise piezoelektrische Aufnehmer, welche Messwerte P in Form von elektrischen Polarisationsladungen P1 - P4 erzeugen, wird so mit der Kalibrierung der Linearitätsfehler der elektrischen Polarisationsladungen P1 - P4 korrigiert. Die kalibrierten Messwertdaten MD weisen einen Linearitätsfehler von kleiner/gleich 1%.

Die kalibrierten Messwertdaten MD geben die Komponentenarten Fx, Fy, Fz der Kraft in mehreren Messbereichen von 500N bis 20kN Endwert mit einer Genauigkeit von kleiner/gleich 4% wieder. In den Messbereichen von 500N bis 20kN Endwert lösen die kalibrierten Messwertdaten MD die Komponentenarten Fx, Fy, Fz der Kraft mit 0.5mV/N bis 4mV/N auf. Die kalibrierten Messwertdaten MD geben die Komponentenart Mz vom Drehmoment in mehreren Messbereichen von 10Nm bis 100Nm Endwert mit einer Genauigkeit von kleiner/gleich 2% wieder. In den Messbereichen von 10Nm bis 100Nm Endwert lösen die kalibrierten Messwertdaten MD die Komponentenart Mz vom Drehmoment mit 0.1V/Nm bis 1V/Nm auf.

Die Aufnehmereinheit 3 speichert die kalibrierten Messwertdaten MD im Auswerte-Datenspeicher 32 ab.

Die Vorrichtung 2 ist mit einer einstellbaren Anzahl von Messkanälen K1 - K4 für einstellbare Komponentenarten Fx, Fy, Fz, My von Kraft und Drehmoment betreibbar. Dazu ist die Anzahl der Messkanäle K1 - K4, in denen die Messeinheit 22 Messwerte P erzeugt, einstellbar. Und auch die Komponentenarten Fx, Fy, Fz, My von Kraft und Drehmoment, für die die Messeinheit 22 Messwerte P erzeugt, sind einstellbar. Vorzugsweise erzeugt die Messeinheit 22 für eine der vier Komponentenarten Fx, Fy, Fz, Mz von Kraft und Drehmoment Messwerte P in einem der vier Messkanäle K1 - K4, oder sie erzeugt für zwei der vier Komponentenarten Fx, Fy, Fz, Mz von Kraft und Drehmoment Messwerte P in zwei der vier Messkanäle K1 - K4, oder sie erzeugt für drei der vier Komponentenarten Fx, Fy, Fz, Mz von Kraft und Drehmoment Messwerte P in drei der vier Messkanäle K1 - K4, oder sie erzeugt für alle vier Komponentenarten Fx, Fy, Fz, Mz von Kraft und Drehmoment Messwerte P in allen vier Messkanälen K1 - K4.

Vorzugsweise erfolgt die Einstellung der Anzahl der Messkanäle K1 - K4 und der Komponentenarten Fx, Fy, Fz, Mz von Kraft und Drehmoment über die Eingabe-/Empfangseinheit 34. Von der Eingabe-/Empfangseinheit 34 erhält die Auswerteeinheit 3 den Befehl die Vorrichtung 2 mit einzustellenden Messkanälen K1 - K4 für einzustellende Komponentenarten Fx, Fy, Fz, Mz von Kraft und Drehmoment zu betreiben. Die Auswerteeinheit 3 erzeugt Steuerdaten SD mit einer Angabe der einzustellenden Messkanäle K1 - K4 und der einzustellenden Komponentenarten Fx, Fy, Fz, Mz von Kraft und Drehmoment zum Betrieb der Vorrichtung 2. Die Auswerteeinheit 3 überträgt die Steuerdaten SD mit den Angaben der einzustellenden Messkanäle K1 - K4 der einzustellenden Komponentenarten Fx, Fy, Fz, Mz von Kraft und Drehmoment drahtlos an die Kontrolleinheit 23 überträgt. Dazu sendet die Auswerte-Sende-/Empfangseinheit 31 die Steuerdaten SD mit den Angaben der einzustellenden Messkanäle K1 - K4 der einzustellenden Komponentenarten Fx, Fy, Fz, Mz von Kraft und Drehmoment an die Kontroll-Sende-/Empfangseinheit 233. Die Kontroll-Sende-/Empfangseinheit 233 empfängt die Steuerdaten SD mit den Angaben der einzustellenden Messkanäle K1 - K4 der einzustellenden Komponentenarten Fx, Fy, Fz, Mz von Kraft und Drehmoment. Die Kontrolleinheit 23 betreibt die Vorrichtung 2 mit den einzustellenden Messkanäle K1 - K4 der einzustellenden Komponentenarten Fx, Fy, Fz, Mz von Kraft und Drehmoment.

Die Steuerdaten SD mit den Angaben der einzustellenden Messkanäle K1 - K4 der einzustellenden Komponentenarten Fx, Fy, Fz, Mz von Kraft und Drehmoment legen also für den Betreiber des Systems 100 bindend fest, in wie vielen und in welchen Messkanälen K1 - K4 die Vorrichtung 2 Kraft und Drehmoment misst. Beispielsweise sind für eine spanende Bearbeitung des Werkstückes 0 wie Bohren zur Überwachung der Qualität des Bohrens zwei Messkanäle K3, K4 für die zwei Komponentenarten der Kraft Fz entlang der Drehachse Z und das Drehmoment Mz um die Drehachse Z ausreichend. Für eine spanende Bearbeitung des Werkstückes 0 wie Fräsen sind zur Überwachung der Qualität des Fräsens hingegen vier Messkanäle K1 - K4 für alle vier Komponentenarten der Kraft Fx, Fy, Fz und des Drehmomentes Mz notwendig. Der Betreiber des Systems 100 kann vom Hersteller von Vorrichtung 2 und Auswerteeinheit 3 eine Lizenz erwerben, mit wie vielen und mit welchen Messkanälen K1 - K4 die Vorrichtung 2 Kraft und Drehmoment misst. Eine Lizenz mit nur zwei Messkanälen K3, K4 für Bohren als spanende Bearbeitung des Werkstückes 0 ist kostengünstiger als eine Lizenz mit allen vier Messkanälen K1 - K4 für Fräsen als spanende Bearbeitung des Werkstückes 0. Die Lizenz des Betreibers des Systems 100 liegt in Form der Steuerdaten SD mit den Angaben der einzustellenden Messkanäle K1 - K4 der einzustellenden Komponentenarten Fx, Fy, Fz, Mz von Kraft und Drehmoment vor.

Die Auswerteeinheit 3 erzeugt Steuerdaten SD mit einer Angabe des einzustellenden Messbereiches B auf Befehl des Auswerteprogrammes A oder auf Befehl der Eingabe-/Empfangseinheit 34.

Denn die verstärkten Messwerte V liegen in einem Messbereich B. Damit die verstärkten Messwerte V in einem Messbereich B mit bestmöglicher Darstellung liegen, überprüft die Auswerteeinheit 3, ob die verstärkten Messwerte V innerhalb von vordefinierten Grenzwerten GW1, GW2 des Messbereiches B liegen. Jeder Messbereich B hat einen grössten Wert oder Endwert (Full Scale). Für eine bestmögliche Darstellung sollten die verstärkten Messwerte V den Endwert nicht übersteigen und sie sollten auch nicht mehr als eine Grössenordnung kleiner als der Endwert sein. Allerdings ist das Messwert-zu-Rausch-Verhältnis in den verschiedenen Messbereichen B unterschiedlich stark ausgeprägt. Je grösser der Messbereich B ist, desto grösser ist das Messwert-zu-RauschVerhältnis. Und auch ist der Linearitätsfehler in den verschiedenen Messbereichen B unterschiedlich stark ausgeprägt. Ein erster Grenzwert GW1 ist daher gleich 90% des Endwertes und ein zweiter Grenzwert GW2 ist deshalb gleich 10% des Endwertes. Falls die verstärkten Messwerte V nicht innerhalb der vordefinierten Grenzwerte GW1, GW2 des Messbereiches B liegen, stellt die Auswerteeinheit 3 einen anderen Messbereich B ein, in welchem die verstärkten Messwerte V innerhalb der vordefinierten Grenzwerten GW1, GW2 des Messbereiches B liegen. Alternativ gibt die Eingabe-/Empfangseinheit 34 der Auswerteeinheit 3 den Befehl, einen bestimmten Messbereich B einzustellen.

Die Auswerteeinheit 3 erzeugt Steuerdaten SD mit einer Angabe des einzustellenden Messbereiches B. Die Auswerteeinheit 3 überträgt die Steuerdaten SD mit der Angabe des einzustellenden Messbereiches B drahtlos an die Prüfvorrichtung 23. Und die Prüfvorrichtung 3 stellt den einzustellenden Messbereich B ein und wandelt die Messwerte P im eingestellten Messbereich B in verstärkte Messwerte V.

### Bezugszeichenliste

- 0: Werkstück
- 1: Werkzeugmaschine
- 11: Werkzeug
- 12: Spindel
- 100: System
- 2: Vorrichtung
- 20: Gehäuse
- 21: Werkzeugadapter
- 22: Messeinheit
- 221 - 224: Aufnehmer
- 23: Kontrolleinheit
- 231: Kontroll-Wandlereinheit
- 232: Kontroll-Analog-/Digital-Wandlereinheit
- 233: Kontroll-Sende-/Empfangseinheit
- 234: Kontroll-Datenspeicher
- 235: Kontroll-Datenprozessor
- 24: Energiespeichereinheit
- 25: Spindeladapter
- 3: Auswerteeinheit
- 31: Auswerte-Sende-/Empfangseinheit
- 32: Auswerte-Datenspeicher
- 33: Auswerte-Datenprozessor
- 34: Eingabe-/Empfangseinheit
- 35: Ausgabeeinheit
- 36: temporärer Datenspeicher
- 310: Gehäuse
- 311: elektrische Leitung
- A: Auswerteprogramm
- B: Messbereich
- AD: Kalibrierdaten
- BD: Messbereichsdaten
- BM: Buffer-Modus
- DR: Datenübertragungsrate
- GW1, GW2: Grenzwert
- K: Kontrollprogramm
- KD: Messkanaldaten
- K1 - K4: Messkanal
- P: Messwerte
- P1 - P4: elektrische Polarisationsladungen
- Fx, Fy, Fz: Komponentenart der Kraft
- L: Sendeleistung
- MD: Messwertdaten
- Mz: Komponentenart vom Drehmonent
- SD: Steuerdaten
- SM: Streaming-Modus
- V: verstärkte Messwerte
- V1 - V4: elektrische Spannungen
- VD: Verbindungsdaten
- X: Längsachse
- Y: Querachse
- Z: Drehachse

## Patentansprüche

1. System (100) zur spanenden Bearbeitung eines Werkstückes (0) und zur Messung und Auswertung von Kraft und Drehmoment bei der spanenden Bearbeitung des Werkstückes (0); welches System (100) eine Werkzeugmaschine (1) zur spanenden Bearbeitung des Werkstückes (0) mit einem Werkzeug (11), eine Vorrichtung (2) zur Messung von Kraft und Drehmoment bei der spanenden Bearbeitung des Werkstückes (0) und eine Auswerteeinheit (3) zur Auswertung von Messwertdaten (MD) der Vorrichtung (2) aufweist; welche Vorrichtung (2) in der Werkzeugmaschine (1) eingebaut ist und sich bei der spanenden Bearbeitung mit dem Werkzeug (12) um eine Drehachse (Z) dreht; welche Auswerteeinheit (3) ortsfest ist; welche Vorrichtung (2) eine Messeinheit (22) aufweist, welche Messeinheit (22) unter der bei der spanenden Bearbeitung wirkenden Komponentenarten (Fx, Fy, Fz, Mz) von Kraft und Drehmoment Messwerte (P) erzeugt; welche Vorrichtung (2) eine Kontrolleinheit (23) aufweist, welche Kontrolleinheit (23) die Messwerte (P) als Messwertdaten (MD) drahtlos direkt an die Auswerteeinheit (3) überträgt; **dadurch gekennzeichnet, dass** die drahtlose Übertragung der Messwertdaten (MD) mit einer Sendeleistung (L) im Bereich von 0.1mW bis 10mW erfolgt.

2. System (100) nach Anspruch 1, **dadurch gekennzeichnet, dass** die Messwertdaten (KD) binäre Zahlenfolgen mit 16bit Auflösung sind.

3. System (100) nach einem der Ansprüche 1 oder 2, **dadurch gekennzeichnet, dass** die drahtlose Übertragung der Messwertdaten (MD) mit einer Datenübertragungsrate (DR) von wahlweise 1Mbit/sec oder 2Mbit/sec erfolgt; und dass die Auswerteeinheit (3) eine Datenübertragungsrate (DR) auswählt, mit welcher ausgewählten Datenübertragungsrate (DR) die drahtlose Übertragung der Messwertdaten (MD) erfolgt.

4. System (100) nach Anspruch 3, **dadurch gekennzeichnet, dass** die Auswerteeinheit (3) Verbindungsdaten (VD) mit Angabe der ausgewählten Datenübertragungsrate (DR) drahtlos an die Kontrolleinheit (23) überträgt; und dass die Kontrolleinheit (23) die Messwertdaten (MD) mit der ausgewählten Datenübertragungsrate (DR) drahtlos an die Auswerteeinheit (3) überträgt.

5. System (100) nach einem der Ansprüche 1 bis 4, **dadurch gekennzeichnet, dass** die Auswerteeinheit (3) eine Auswerte-Sende-/Empfangseinheit (31) aufweist, welche Auswerte-Sende-/Empfangseinheit (31) eine Antenne aufweist und über die Antenne die Messwertdaten (MD) als elektromagnetische Wellen von der Kontrolleinheit (23) empfängt; dass die Auswerte-Sende-/Empfangseinheit (31) in einem eigenständigen Gehäuse (310) angeordnet ist; und dass das Gehäuse (310) für die drahtlose Übertragung der Messwertdaten (MD) räumlich bezüglich der Kontrolleinheit (23) ausrichtbar ist.

6. System (100) nach einem der Ansprüche 1 bis 5, **dadurch gekennzeichnet, dass** die Auswerteeinheit (3) einen temporären Datenspeicher (36) aufweist; dass die Auswerteeinheit (3) von der Kontrolleinheit (23) drahtlos übertragene Messwertdaten (MD) im temporären Datenspeicher (36) speichert; und dass die Auswerteeinheit (3) den temporären Datenspeicher (36) wahlweise in einem Buffer-Modus (BM) oder in einem Streaming-Modus (SM) ausliest.

7. System (100) nach einem der Ansprüche 1 bis 6, **dadurch gekennzeichnet, dass** die Kontrolleinheit (23) die Messwertdaten (MD) komprimiert, bevor sie sie drahtlos an die Auswerteeinheit (3) überträgt; und dass die Auswerteeinheit (3) die drahtlos übertragenen Messwertdaten (MD) dekomprimiert.

8. System (100) nach Anspruch 7, **dadurch gekennzeichnet, dass** die Kontrolleinheit (23) bei der Kompression der Messwertdaten (MD) redundante Informationen in den Messwertdaten (MD) entfernt; und dass die Auswerteeinheit (3) bei der Dekompression die entfernten redundante Informationen in den Messwertdaten (MD) wieder hinzufügt.

9. System (100) nach einem der Ansprüche 1 bis 8, **dadurch gekennzeichnet, dass** die Kontrolleinheit (23) die Messwertdaten (MD) ohne sie zu kalibrieren an die Auswerteeinheit (3) drahtlos überträgt; dass in der Auswerteeinheit (3) Kalibrierdaten (AD) gespeichert sind, welche Kalibrierdaten (AD) einen Linearitätsfehler der Messwerte (P) korrigieren; und dass die Auswerteeinheit (3) die drahtlos übertragenen Messwertdaten (MD) mit den Kalibrierdaten (AD) kalibriert.

10. System (100) nach Anspruch 9, **dadurch gekennzeichnet, dass** die Messeinheit (22) die Messwerte (K) in mehreren Messkanälen (K1 - K4) erzeugt; dass die Kalibrierdaten (KD) spezifisch für jeden Messkanal (K1 - K4) sind; dass die Kontrolleinheit (23) Messkanaldaten (KD) erzeugt, welche den Messkanal (K1 - K4) eineindeutig bezeichnen, in dem die Messeinheit (22) Messwerte (K) erzeugt hat; dass die Kontrolleinheit (23) die Messkanaldaten (KD) an die Auswerteeinheit (3) drahtlos überträgt; dass die Auswerteeinheit (3) die Kalibrierdaten (AD) den Messwertdaten (MD) und den Messkanaldaten (KD) zuordnet; und dass die Aufnehmereinheit (3) die Messwertdaten (MD) spezifisch für jeden Messkanal (K1 - K4) mit den zugeordneten Kalibrierdaten (AD) kalibriert.

11. System (100) nach Anspruch 10, **dadurch gekennzeichnet, dass** die Aufnehmereinheit (3) bei der Kalibrierung der Messwertdaten (MD) mit zugeordneten Kalibrierdaten (AD) spezifisch für jeden Messkanal (K1 - K4) eine Multiplikation von einzelnen Messwertdaten (MD) mit zugeordneten einzelnen Kalibrierdaten (AD) durchführt.

12. System (100) nach einem der Ansprüche 1 bis 11, **dadurch gekennzeichnet, dass** eine Anzahl der Messkanäle (K1 - K4), in denen die Messeinheit (22) Messwerte (P) erzeugt, einstellbar ist; dass die Komponentenarten (Fx, Fy, Fz, My) von Kraft und Drehmoment, für die die Messeinheit (22) Messwerte (P) erzeugt, einstellbar ist; und dass durch die Auswerteeinheit (3) eine Einstellung der Anzahl der Messkanäle (K1 - K4) und der Komponentenarten (Fx, Fy, Fz, Mz) von Kraft und Drehmoment erfolgt.

13. System (100) nach Anspruch 12, **dadurch gekennzeichnet, dass** die Auswerteeinheit (3) zur Einstellung der Anzahl der Messkanäle (K1 - K4) und der Komponentenarten (Fx, Fy, Fz, Mz) von Kraft und Drehmoment Steuerdaten (SD) mit einer Angabe der einzustellenden Messkanäle (K1 - K4) und der einzustellenden Komponentenarten (Fx, Fy, Fz, Mz) von Kraft und Drehmoment erzeugt; dass die Auswerteeinheit (3) die Steuerdaten (SD) mit den Angaben der einzustellenden Messkanäle (K1 - K4) der einzustellenden Komponentenarten (Fx, Fy, Fz, Mz) von Kraft und Drehmoment drahtlos an die Kontrolleinheit (23) überträgt; und dass die Kontrolleinheit (23) die Vorrichtung (2) gemäss den Angaben der einzustellenden Messkanäle (K1 - K4) der einzustellenden Komponentenarten (Fx, Fy, Fz, Mz) von Kraft und Drehmoment betreibt.

14. System (100) nach einem der Ansprüche 1 bis 13, **dadurch gekennzeichnet, dass** die Kontrolleinheit (23) die Messwerte (P) in verstärkte Messwerte (V) eines Messbereiches (B) wandelt; dass der Messbereich (B) in dem die verstärkten Messwerte (V) liegen, einstellbar ist; dass die Auswerteeinheit (3) Steuerdaten (SD) mit einer Angabe des einzustellenden Messbereiches (B) erzeugt; dass die Auswerteeinheit (3) die Steuerdaten (SD) mit der Angabe des einzustellenden Messbereiches (B) drahtlos an die Prüfvorrichtung (23) überträgt; und dass die Prüfvorrichtung (3) den einzustellenden Messbereich (B) einstellt und die Messwerte (P) in den eingestellten Messbereich (B) wandelt.

15. System (100) nach Anspruch 14, **dadurch gekennzeichnet, dass** die Kontrolleinheit (23) Messbereichsdaten (BD) erzeugt, welche den Messbereich (B) eineindeutig bezeichnen, in dem die verstärkten Messwerte (V) liegen; dass die Kontrolleinheit (23) die verstärkten Messwerte (V) als Messwertdaten (MD) und die Messbereichsdaten (BD) drahtlos an die Auswerteeinheit (3) überträgt; dass die Auswerteeinheit (3) überprüft, ob die verstärkten Messwerte (V) innerhalb von vordefinierten Grenzwerten (GW1, GW2) des Messbereiches (B) liegen; dass falls die verstärkten Messwerte (V) nicht innerhalb der vordefinierten Grenzwerte (GW1, GW2) des Messbereiches (B) liegen, die Auswerteeinheit (3) einen anderen Messbereich (B) einstellt, in welchem die verstärkten Messwerte (V) innerhalb von vordefinierten Grenzwerten (GW1, GW2) des Messbereiches (B) liegen; dass die Auswerteeinheit (3) Steuerdaten (SD) mit einer Angabe des einzustellenden Messbereiches (B) erzeugt; dass die Auswerteeinheit (3) die Steuerdaten (SD) mit der Angabe des einzustellenden Messbereiches (B) drahtlos an die Prüfvorrichtung (23) überträgt; und dass die Prüfvorrichtung (3) den einzustellenden Messbereich (B) einstellt und die Messwerte (P) in den eingestellten Messbereich (B) wandelt.
